# EUROPEAN PATENT APPLICATION

(11) **EP 4 425 436 A1**
(43) Date of publication of application: **04.09.2024**
(21) Application number: 23159443.3
(22) Date of filing: 01.03.2023
(51) Int. Cl.: G06T 11/00

(54) **CT PROJECTIONS-BASED RESPIRATORY BINNING**

(71) Applicant: Koninklijke Philips N.V., 5656 AG Eindhoven (NL)
(72) Inventor: KABUS, Sven, Eindhoven (NL); KOEHLER, Thomas, Eindhoven (NL)
(74) Representative: Philips Intellectual Property & Standards

(57) **Abstract**

System (SYS) and related method for processing projection data for tomographic imaging. The system comprises an input interface (IN) for receiving projection imagery acquired by a tomographic imaging apparatus (IA) along different projection directions of an anatomical feature (AF) of an object undergoing motion, with transitions through plural motion states. An in-image detection component (DC) detects, in respect of at least one reference path, a motion state of the anatomical feature (AF) based on image information in the projection imagery. A gating component (GC) assigns a subset of the projection imagery to a motion state bin, based on the detected motion state. An output interface (OUT) provides the so assigned subset of projection imagery for reconstruction.

## Description

### FIELD OF THE INVENTION

The invention relates to a system for processing projection data for tomographic imaging, to an imaging arrangement including such as system, to a related method, to a computer program element, and to a computer readable medium.

### BACKGROUND OF THE INVENTION

4D-CT imaging is routinely used in radiation oncology and potentially in other applications, such as in radiology. On the basis of a respiratory-phase based gating, a tumor or an organ (lungs, liver, kidneys etc.) can be followed over respiratory time. Gating refers to the operation of collecting, from a stream of projection data, a respective subset that represents the imaged organ or anatomy in a certain, respective, motion state. A more accurate, motion-compensated reconstruction may then be computed from the collected subset of projection data.

Some respiratory-phase based gating may call for additional hardware ("device-based"), such as a pressure sensor belt attached to the patient to measure the current respiratory state. Such a device-based setup is disadvantageous, as it makes clinical workflow more cumbersome. For example, the device needs to be procured, to be cleaned, there are maintenance costs, and there is a lengthy priorimaging preparatory setup, etc.

### SUMMARY OF THE INVENTION

There may therefore be a need for more efficient imaging of moving regions of interest.

An object of the present invention is achieved by the subject matter of the independent claims where further embodiments are incorporated in the dependent claims. It should be noted that the following described aspect of the invention equally applies to the imaging arrangement, to the related method, to the computer program element, and to the computer readable medium.

According to a first aspect of the invention there is provided a system for processing projection data (projection imagery) for tomographic imaging, comprising:
an input interface for receiving projection imagery (comprising frames) acquired by a tomographic imaging apparatus along different projection directions of an anatomical feature of an object undergoing motion, with transitions through plural motion states;
an in-image detection component configured to detect, in respect of at least one reference path, a motion state of the anatomical feature based on image information in the projection imagery;
a gating component configured to assign a subset of the projection imagery to a motion state bin-based on the detected motion state, and
output interface for providing the so assigned subset of projection imagery for reconstruction.

Specifically, the said image information may be wholly included in one or more neighborhoods in the projection imagery acquired over time. For example, the said image information may be image feature, such as an edge structure, in the projection imagery (such as in a frame).

The gating component may be configured to interpolate motion states for other frames in the projection imagery that were not used on the in-image detection by in-image detection component. Thus, if required, each (or at least most) frames can be assigned as motion state bin.

In embodiments, the said path is selected based on an analysis of a surview image of the anatomical feature or on an analysis of the projection imagery.

The surview image is preferably a 2D X-ray image covering the anatomical feature and also other structures of interest. Preferably, a lower X-ray dose is used when acquiring the surview image, as compared to the higher dose used when acquiring the projection imagery in a diagnostic scan. The surview image is preferably used in "step & shoot" ("S&S") axial scans protocol. It is not usually required to use a helical scan protocol, however this may also be done.

In embodiments, the detected motion state is of an anatomical feature.

For example, in a medical context as mainly envisaged herein, the "object" may relate to the patient or a part thereof, such chest wall, whilst the anatomical feature can be its anterior boundary for example.

In embodiments, the said detection of motion state is in respect of a plurality of such reference paths.

In embodiments, a plane of the at least one such reference path is substantially perpendicular to a projection direction at which at least some of the projection imagery is acquired.

In embodiments, the said anatomical feature resides during such motion, wholly, and at all times, within the tomographic imaging apparatus's field of view.

In embodiments, the system includes a tomographic reconstructor to reconstruct for at least one motion state, and based on projection imagery assigned to that bin and/or to one or more bins of similar states, a reconstructed sectional image volume representative of the object in the said motion state. The reconstructor may use any of a number of tomographic reconstruction algorithms, such filtered backprojection, or those of the iterative type, etc.

In embodiments, the projection imagery is one obtained by an imaging-geometry-("IG")-binner from a first imaging geometry used by the imaging apparatus into a second imaging geometry. To be sure, this IG-based binning is different from the motion state based binning, as is of main interest herein.

In embodiments, the first imaging geometry is of the cone-beam and/or helical type, and where the second geometry is a parallel, or quasi-parallel one, such as a wedge-geometry.

In embodiments, the system includes a display device for displaying the reconstructed image and/or the motion-state.

In embodiments, the tomographic imaging apparatus is configured for axial or helical imaging.

In embodiments, the said anatomical feature includes at least a portion of one or more of an imageable patient's diaphragm, chest wall, and abdominal wall.

In embodiments, the said motion is periodic.

In embodiments, the anatomic feature is an anatomy of a patient, and wherein such motion is caused by any of: respiratory activity and cardiac activity, or any other motion caused by bio-activity.

In embodiments the system may include a path definer configured to compute such reference path based on a surview image or based on said or other projection imagery.

In embodiments, the said motion is along or across said reference path.

In embodiments, wherein the said reference path is a line, and this is indeed preferred and envisaged in most embodiments herein. The path/line is in image domain as opposed to in projection domain. A projection of the path/line as recorded in the projection imagery is used for the in-image detection in projection domain. The reference line/path may be defined in a specific, dedicated image processing operation, either based on surview imagery (preferably 2D), or based on the projection imagery itself.

In embodiments, the said motion is along or across said reference path. For example, in some embodiments the reference path is so chosen that the anatomical feature may cross the reference path at one or more times (eg, repeatedly), thus causing a changing pattern of attenuation values being recorded in the projection imagery. This attenuation value changing patten (eg, pulsating, or other) can be detected by the in-image detection component to so detect motion state, and may be used by gating component for motion state binning. For example, the diaphragm is one such features, with reference line running in AP direction and through the diaphragm.

In another aspect there is provided an imaging arrangement comprising the system as per any one of the above-described embodiments, and the imaging apparatus.

In embodiments of the arrangement, the system is at least partly integrated into an operator console or into a workstation as part of, or at least associated with, the imaging apparatus.

In another aspect there is provided a method of processing projection data for tomographic imaging, comprising:
receiving projection imagery acquired by a tomographic imaging apparatus along different projection directions of an anatomical feature of an object undergoing motion, with transitions through plural motion states;
in-image detecting, in respect of at least one reference path, a motion state of the anatomical feature based on image information in the projection imagery;
assigning a subset of the projection imagery to a motion state bin-based on the detected motion state, and
providing the so assigned subset of projection imagery for reconstruction.

The method may further include reconstruing an image based on the subset of projection imagery. Different such images, one or more for each state, may be reconstructed per bin.

In yet another aspect there is provided a computer program element, which, when being executed by at least one processing unit, is adapted to cause the processing unit to perform the method.

In another aspect there is provided at least one computer readable medium having stored thereon the program element.

The proposed system and method allow gating without additional hardware, such as without an ECG (electro-cardiogram)-apparatus for cardiac gating or without the mentioned pressure belt for respiratory gating. The proposed method is "device-less" as it effects gating solely based on analyzing information in the acquired projection image.

In addition, the proposed approach is more responsive and requires less CPU and memory outlay as no additional reconstruction is needed which can be otherwise computationally demanding. The proposed approach avoids a "detour into image domain" over and above the reconstruction needed based on the gated projection data.

For example, it may be conceivable to effect image-based, device-less gating by performing a first reconstruction that creates a set of (partial) image volumes followed by an image-based estimation of their respiratory states in image domain. Based on the respiratory state of each partial volume, the projection data corresponding to partial volumes belonging to the same respiratory bin may be assembled and passed to a second reconstruction from which the (full) image volumes can be obtained. But thanks to the proposed system and method, computational demands can be lowered. Thus, the proposed system and related method is not only device-less, but also "reconstructions-less", as the first reconstruction step can be omitted, thus enabling highly responsive return, with lower compute demand and less memory consumption. The method and system may be run at least in parts on a mobile computing unit (smart phone tablet, etc.) which are usually less powerful than a server. Only the reconstruction in the end, based on the gated data can then be outsourced to one or more such servers, thus creating a highly responsive system that can be run even on thin clients on an edge device, with only the (single) reconstruction phase done in the Cloud, if needed.

The proposed method is also robust against interference from objects that appear and reappear in the field of view (FOV) during the acquisition, as there are in practice very often objects larger than the scan FOV. Thus, such object tend to appear "moving" in and out of the detector FOV, like blankets, cables, and even the patient couch itself. The proposed approach is more robust, as the in-(projection) image detection is preferably confined to the analysis of projection footprints of feature (preferably anatomical features), which remain basically at all times in the beam, e.g. in the helical embodiment when footprints of the chest wall or similar features are detected, and used as a basis for the binning/gating. In particular, for respiratory motion, the chest wall is a good surrogate for the phase/motion state, and it has been found that it can be well detected in lateral projections for example. However, for other applications, other anatomical feature(s), reference lines, and/or projection directions may be called for in order to secure this benefit of added robustness against transient in-FOV (projection) image features.

In embodiments, based on the attenuation of a single reference line/ray (or alternatively, of a set of such refence lines/rays), eg, respiratory triggering points are determined and used for binning into respective states, such as respiratory states. The same can be done when imaging for cardiac states, or for any another anatomies or regions of interest (ROIs) that are subject to motion during projection data acquisition.

*"user"* relates to a person, such as medical personnel or other, operating the imaging apparatus or overseeing the imaging procedure. In other words, the user is in general not the patient. It is the patient who is being imaged.

*"object"* refers a part of the patient, such as an anatomy or organ, or group of anatomies or organs of the patient. Object may include a region of interest or an anatomical feature.

*"motion state"* as used herein is a (momentary) position/orientation of at least a part of the anatomical feature.

*"bin"* includes a specification of motion state. Stares that are sufficiently similar are in the same bin. Bins may be defined as one or more intervals of angular or position (length, deformation) data that is used to track the motion states in the in-image detection.

"binning/ gating" is the process of assigning frame (part of the projection imagery) to certain bin.

*"anatomical feature"* any anatomy part of anatomy, tissue, etc that are suitably affected by motion and that can serve to detect motion states.

### BRIEF DESCRIPTION OF THE DRAWINGS

Exemplary embodiments of the invention will now be described with reference to the following drawings, which, unless stated otherwise, are not to scale, wherein:
Fig. 1 shows a schematic diagram for a tomographic imaging arrangement;
Fig. 2 shows acquisition of projection imagery recordable in an axial scan protocol;
Fig. 3 shows projection imagery recordable in a helical scan path protocol;
Fig. 4 shows periodic motion extractable from recorded projection imagery;
Fig. 5 shows a schematic block diagram of a motion compensator as may be used in a tomographic imaging system in one embodiment;
Fig. 6 shows a flow chart of a computer-implemented method for processing projection data for tomographic imaging, and
Fig. 7 is an illustration of the method of Fig 6.

### DETAILED DESCRIPTION OF EMBODIMENTS

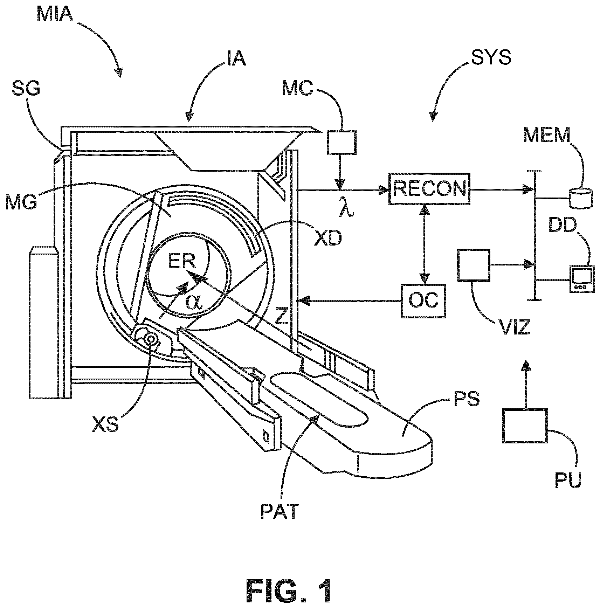

Reference is first made to the block diagram Fig. 1, which shows a medical imaging arrangement MIA. The arrangement MIA includes preferably an X-ray based tomographic imaging apparatus IA capable of acquiring projection data λ of a patient PAT residing in an examination region ER. Patient's longitudinal axis is preferably aligned with the rotation axis Z of imaging apparatus IA ("imager"/"scanner"), indicated as axis Z in Fig. 1. Thus, axis Z will be used herein to denote both, patient's longitudinal axis and rotation axis of imaging apparatus IA.

The projection data λ, referred to herein as projection imagery, for such it is, produced by the imaging apparatus IA may be forwarded wirelessly or in a wired fashion to a computing system SYS which processes the projection imagery λ to produce tomographic sectional slice or volume image data V which can be stored in a memory, visualized by a visualizer VIZ on a display device DD to inform therapy, diagnosis, used for planning as required, or such image data V may be otherwise processed. What is mainly envisaged herein is a time series of 3D volumes, sometime referred to as "4D" imaging. A stream or video feed Vt may be obtained by reconstructions from a stream of projection imagery. However, reconstruction at a single time instant as a still is not excluded herein. and is indeed in envisaged in some applications.

Computing system SYS may be integrated in an operating console OC of the imaging apparatus IA, or may be integrated in another computing device PU such as a workstation associated with the imager IA.

Motion of the patient PAT during the image acquisition can severely impact the quality of the sectional or volume imagery V reconstructed in image domain from the projection imagery λ. For this reason, the computing system SYS may include, as proposed herein, a motion compensator module MC ("motion compensator"), which is operable to compensate, by gating, for motion experienced by the patient PAT. Before explaining the operation of the motion compensator MC in more detail, reference is now first made to the components of the imaging apparatus IA, in order to facilitate the explanation of the motion compensator thereby providing more context around this.

The tomographic imaging apparatus IA is configured for multi-directional projection imagery λ acquisition. The imaging apparatus IA is thus capable of acquiring projection imagery λ along different projection directions α relative to the examination region ER, and thus to the anatomical region of interest ("ROI") of the patient.

Acquisition may be done in embodiments by a rotational system where at least the X-ray source XS is arranged in a moveable gantry MG. The movable gantry (and with it the X-ray source XS in some embodiments) is rotatable in a stationary gantry SG around the examination region ER in which the patient/ROI resides during imaging. Opposite the X-ray source in the movable gantry there is arranged the X-ray detector XD, which may rotate with the gantry and X-ray source around the examination region ER and about rotation axis Z, to realize different projection directions α. The source XS may trace out a scan orbit during acquisition, whilst in some embodiments the detector XS may remain in opposed spatial relationship across the examination region ER and thus the ROI.

As schematically indicated in Fig. 1, patient's longitudinal or imaging axis Z may extend into the examination region ER during imaging. Patient PAT may lie on a patient support PS, such as a bed/couch, which is positioned at least partly in the examination region ER during imaging.

The imager IA may be a CT scanner setup as illustrated in the Fig. 1 and may be used for diagnostic purposes. However, other tomographic imaging equipment, such as C-arm or U-arm scanners, or similar, or Cone beam CT arrangements, etc., are not excluded herein. C-arm cone beam imagers may be used in some embodiments, such as in therapeutic sessions in catheter lab (Cathlab) or trauma rooms or other.

The multi-directional acquisition capability may not necessarily result from a rotational system such as shown in Fig. 1. Non-rotational imaging systems IA are also envisaged, such as in CT scanners of 4^{th} or 5^{th} generation, where multiple X-ray sources are arranged around the examination region in a source annulus for example. In addition or instead, the detector XD may be arranged as a detector annulus around the examination region. Thus, in such systems there is no rotation of the X-ray source XS or detector XD, or of both. Thus, in such scanner there is merely an apparent rotation rather than a physical one, however we will refer herein to "rotation axis" or "rotation", for whichever generation of CT scanners herein, with the understanding that the rotation of source XS may be a physical or an apparent one.

There may be an operator console OC through which a user, such as medical personnel, controls imaging operation. For example, the user may request initiating the image acquisition or may request reconstruction or other operations, or may initiate transmission of data to the computing system PU, or may halt such transmission as required, or may set imaging parameters such as pitch, or tube XS settings, such as amperage and/or voltage, etc.

During imaging, and whilst source XS rotates or in between such phases of such rotations, an X-ray beam XB issues forth along the different projection directions α, from a focal spot of the X-ray source(s) XS. The beam XB passes through the examination region with the patient in it. The X-radiation interacts with patient tissue. The X-ray beam XB is modified as a result of this interaction. In general, such X-ray beam XB modification includes attenuation and scattering of the original incoming X-ray beam. The modified X-radiation is then detected as a spatial distribution of various intensities at X-ray sensitive pixels of the detector XD. The projection direction α may refer to a mean projection direction, that is the angle formed by the imaginary line that runs from focal spot of source XS, to center point of detector XD, relative to a zero position, such as at 12 o'clock or other. In particular in divergent imaging geometries, a given one projection direction α may be represented by a geometrical line that runs from focal spot of an X-ray source XS of the imager IA, to a certain detector pixel of the imager IA's detector XD. Thus, in a divergent imaging geometry, different pixels may relate to different projection directions.

It is not necessary herein to acquire projection images λ over a full 360° angular range around the examination region ER. Acquisition over a partial angular range such as a range of 270°, 180°, or even less may be sufficient. The X-ray detector is preferably configured for acquisition of 2D projection images with rows and columns of intensity values as registered by the detector pixels. That is, the detector pixels themselves may be arranged in a matrix layout. Such a 2D layout may be used in divergent imaging geometries, such as cone or fan beam or others. However, one dimensional detector pixel layouts (such as along a single detector line) are not excluded herein, and neither are parallel beam geometries. The detector pixel layout in 1D or 2D may be curved or planar. Digital 2D detectors are preferred herein. The layout of pixels defines the data space ("projection domain") in which the projection imagery is defined. The layout of detector pixels may be referred to herein as the (projection) image plane, or more generally as mainly done herein, as the (projection) image surface. Per convention, detector pixel columns are generally parallel to the rotation axis Z, whilst detector pixel rows run in a direction across the rotation axis Z.

The reconstructor RECON implements one or more reconstruction algorithms to process the projection imagery. Specifically, the reconstructor RECON may compute a sectional image V of the examination region (with the patient in it) for diagnostic, therapeutic, or other purposes. The reconstructor RECON may be able to produce sectional volumetric image data ("image volume(s)") V. However, this does not exclude producing a single image slice in the examination region ER as required. Thus, the reconstructed imagery may be denoted herein as V which may include the whole volume, a partial volume, or a specific section therethrough. Volumetric reconstruction may be facilitated by the helical movement and/or the 2D layout of the X-ray detector XD.

In general, reconstruction algorithms implement a mapping that maps projection imagery λ located in projection domain into image domain. Image domain is a portion of 3D space and is located in the examination region ER of the imaging apparatus, whilst the projection domain is in another 3D space, defined by the 2D detector and an angular dimension (the projection direction), and is located at an (X-ray) detector XD of the imaging apparatus IA. The image domain is conceptually made up of 3D grid points (voxels). The reconstruction algorithm, be it of the FBP (filtered back-projection)-, algebraic- or iterative-type, populates the voxels with image values (such as HU values) to so build up the image volume V or image slice at a given time.

Referring now to patient motion in more detail, this may be voluntary/patient-controllable or involuntary/uncontrollable. For example, the patient may be fidgety such as a child patient or may otherwise be noncompliant. Other such patient-controllable is wanted, such as planned movement, or during a breath-hold in chest imaging. Involuntary/uncontrollable motion may be due to bio-activity, such motion being caused by breathing activity for example. Such activity causes motion within the body, which may be imparted to other anatomies, so that the motion may be even detectable from the outside of patient's body. One example is motion associated with respiration, which may involve motion of the chest, rib cage, parts of abdomen, and the diaphragm dome, etc. For example, the diaphragm dome is expanding and collapsing repeatedly with passage through the respiratory cycles. Another example of involuntary, uncontrollable motion is the cardiac cycle, as the pumping action of the heart may also impart motion, not only of the heart itself, but also on surrounding tissues and organs. Other patientuncontrollable motion may include motion caused by peristaltic, tremor, etc.

Not accounting for motion that happens during projection data acquisition may lead to image artefacts in the image domain volume or tomographic image V reconstructed from the projection imagery λ. This is because the reconstruction algorithm will be faced with inconsistent data as the same point of tissue will appear at different voxel positions during the motion. This inconsistency in the acquired projection data λ may cause the reconstruction algorithm, in particular of the iterative type, to converge to sub-optimal solutions when populating the voxel grid with image values to build up the tomographic image V. This in turn can cause bogus image structures, artefacts, that may occlude crucial clinical image information which can in some cases render the image undiagnostic, useless, for the intended medical task. This may in turn incur image re-takes which is costly, delays image throughput which is detrimental for busy clinics. In addition, unnecessary retakes incur dosage cost to the patient PAT and to medical user (staff), thus posing a health risk.

Thus, motion artefacts in medical imagery are something to be avoided or to be mitigated, and this is what the proposed motion compensator MC is configured to do. The motion compensator MC may be arranged in hardware, software, or both. Motion compensator MC may be integrated into operating console OC of the imaging apparatus for use on-site/on-line, during the imaging session in the exam room,, Instead of in addition, motion compensator MC may also be used later instead, eg, in a workstation WS/PU, where the imagery can be motion-compensated post acquisition at any time after the imaging session, for example when a radiologist-user is reviewing the image data to inform their findings.

While the anatomical feature AF undergoes some form of motion, projection imagery λ is acquired. The projection imagery λ includes individual frames, acquired at different times and projection directions during the acquisition. Broadly, the motion compensator MC uses a post-acquisition (retrospective) gating mechanism, where a gating component GC analyses the acquired projection imagery λ into groups or "bins" (sub-sets of frames). Thus. each such bin includes a respective sub-set of frames of the projection imagery. Each bin, and hence its frames, is associated with a certain motion state of an anatomical feature AF, as will be explained in more detail below. Specifically, the projection imagery is analyzed for the motion of anatomical feature AF in respect of a reference line ℓ, or at least in relation to such as line ℓ. The reference line (or each of a plurality of such lines) is a geometric line in image domain. It may be pre-defined, or user-defined. For example, the reference line ℓ may be defined by a user via a user interface UI, such as a graphical UI (GUI), where the user can draw the line in a simulation of the examination region. The line may be otherwise provided, such as automatically computed, as will be explained in more detail below.

The reference line ℓ is generally located inside the examination region ER and is preferably selected such that during motion of the patient (in particular of the anatomical feature AF), an edge (gradient) is recordable in the projection imagery. Such edge represents a sufficiently pronounced attenuation gradient which is moveable in respect of the reference line ℓ, for example, is movable along the reference line ℓ. The anatomical feature AF may include the diaphragm dome or chest wall. In such or other cases, an example of such reference line ℓ envisaged herein include a line parallel to the axis Z passing, at least at times, through the diaphragm dome AF. Another example includes a reference line that passes, at least at times, through the chest wall AF of the patient in AP direction.

For a specific such reference line ℓ, there is at least one corresponding projection angle α on the scan path Ofrom which the said edge moving along the reference line can be tracked in associated projection λ(ℓ) of the reference line ℓ as recordable in associated frames projection domain.. For the example, for the said reference line ℓ passing through the diaphragm dome, this projection angle α may correspond to the AP - projection direction. For the example reference line covering the chest wall, the corresponding projection direction α is lateral. The reference lines ℓ and their associated projection directions α as envisaged herein afford detecting such edges at high contrast which allows for robust tracking and thus robust binning. It will be understood that any reference herein to such angle α includes a reference to its complement at α+180° as the case may be for full angular scans.

Motion states may correspond to a particular configuration which the anatomical feature AF is assuming at any given point during the motion. The motion may be, as considered herein, periodic and may extend over multiple cycles. A motion state, or "bin", to which a respective sub-set of the projection imagery is assigned to may thus correspond to a respective phase of a periodic motion. Frames of the projection imagery form the sub-set for that motion state or bin. Preferably, some or each bin includes frames recorded at different projection directions α. The number (≥2) of bins may be predefined by user through a suitable user interface. Thus, the frames of the projection imagery for that a given bin represent the region of interest to be imaged such as the lungs, thorax or heart of the patient, in a given motion state. The reconstructor RECON may then reconstruct a version of the volume for that given motion state based only on the frames from the bin associated with that motion state. Thus, if there are any number of states/bins, each associated with its respective set of projection frames, a respective, different version of the tomographic image can be reconstructed each representing the region of interest in a different one of the states. A user, such as a reviewing radiologist, may then choose the state that best serves the medical purpose at hand.

It should be noted that the projection-domain based gating principles described herein are not necessarily confined to periodic motion. Non-periodic motion instances are also envisaged herein. Such non-periodic motion instance may occur for example if the patient is unbale to maintain a breath-hold during the entire acquisition.

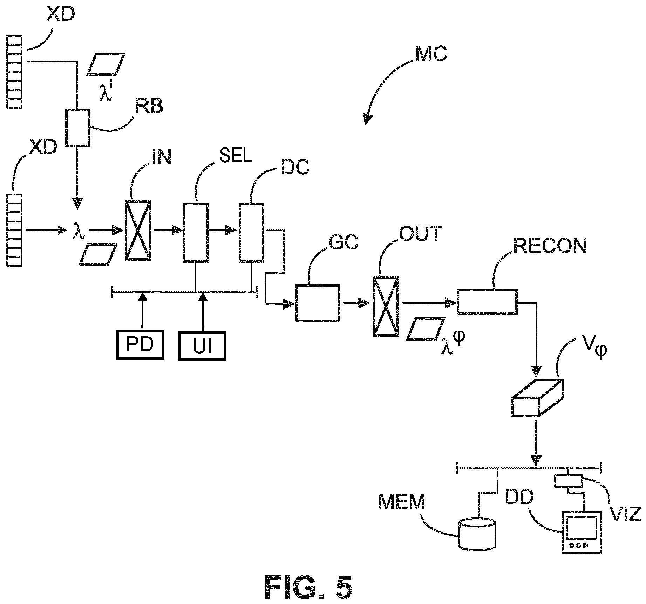

What is proposed herein is that the motion compensator component, and in particular the gating component GC (explained in more detail below at Fig. 5), is operable solely in projection domain. so operates solely on structural image information in projection imagery λ. No image information from image domain, in particular, no partial or preliminary reconstruction operation of imagery is required for the proposed motion compensator MC. This greatly reduces the burden on CPU time and/or memory as execution of reconstruction algorithms, particular of the iterative type, may be demanding, the proposed setup requires merely one reconstruction per state, and not two as previous approaches. Thus, the proposed motion compensator module MC allows avoiding unnecessary reconstructions, and is therefore quicker and more responsive, which is an important consideration in particular in online/on-site/in-room uses, in particular for busy medical facilities and situations where image delivery in substantially realtime is called for such as in trauma settings.

Again, broadly, the motion compensator MC uses only image projection information as encoded in the projection imagery collected over time to identify therein the anatomical feature AF, and its motion states as projections. For example, in embodiments, the anatomical feature may include the diaphragm or other suitable landmark which is affected by, and thus forms a suitable surrogate for, the motion. Thus, the anatomical feature AF is not necessarily the feature causing the motion, but is a feature affected by motion and functionally related to such motion that may be caused elsewhere, and the manner in which the AF is affected is a tell-tale, or surrogate, for the said motion. Thus, the anatomical feature AF as used herein is primarily used to establish motion information to compensate for same. The anatomical feature AF is in general different from the region of interest ROI, the latter being the purpose and object of interest for the imaging. For example, the anatomical feature AF may be the diaphragm, but it is one or more lungs that is/are the ROI, such as in a chest scan. The ROI may define a space in 3D image domain that includes further parts (anatomies, organs, etc.) of the patient, not only the AF. The over-time analysis of the projection imagery for the landmark AF can be based on segmentation, optical flow, machine learning, on thresholding of intensity values, or on any other image processing algorithm, which allows tracking motion of the anatomical feature AF across the time series of frames acquired over time at a certain field of view. This over-time-tracking of anatomical feature AF's footprint (shadow) over motion cycles allows establishing the various motion phases/states. As each phase corresponds to a given motion state, this allows assigning a given frame representative of that phase to the corresponding motion state/bin as explained above thus, effecting the binning. The over-time analysis allows forming an over-time profile, and this can be monitored for gating trigger events for assigning a given frame to a phase/bin. The monitoring and the definition of the over-time profile is based solely on image information in the projection imagery. As will be explained in more detail below, the over timeanalysis of the projection imagery is a function of the reference line ℓ. As the disclosure herein is not limited to periodic motions, *"phase"* (sometimes denoted herein as "ϕ"). will be used herein at time as another term for the *"(motion) state".*

Embodiments envisaged herein for motion compensator MC may depend on the operational mode or configuration of the tomographic CT imaging apparatus. One operational mode envisaged herein includes axial scanning, sometimes also referred to as step and shoot ("S&S"). Another operational mode includes helical scanning, preferably with cone beam geometry, although such cone beam geometry may also be used in S&S. The different operational modes define different scanning orbits as traced out at least by the source XS in a rotation, such as in CT scanners up to fourth generation. However, such rotation may be an apparent one, such in fifth generation CT scanners, where, as mentioned above, instead of a rotational source, a source annulus around the examination region is used, with a detector anulus to effect multi-directional imaging. The rotation may be one or more full rotations at 360°, or at least at 180°.

In embodiments of axial protocols, the X-ray source rotates around the anatomical feature in a given plane, whilst projection imagery in that plane is being collected. The scan paths in each plane may circular, but other geometries are also envisaged. Rotation then ceases, and a relative translational motion along the rotation axis Z, between source XS and patient is effected (e.g., patient table is translated along Z), until a next z position long axis Z is reached. Rotation of source is then re-started, but now in a new plane, intersecting the axis Z at the new position z', in order to continue acquiring projection imagery, and so on, with translation along axis Z and rotation thereabout taking turns. Frames collected over a range of different z positions then form the projection imagery that is analyzed by the motion compensator MC. Helical protocols are different, in that the X-ray source traces out a helical scan path with Z axis as its central axis. Thus, during acquisition, rotation of source XS about axis Z, and its relative translation along the said axis Z, occur simultaneously.

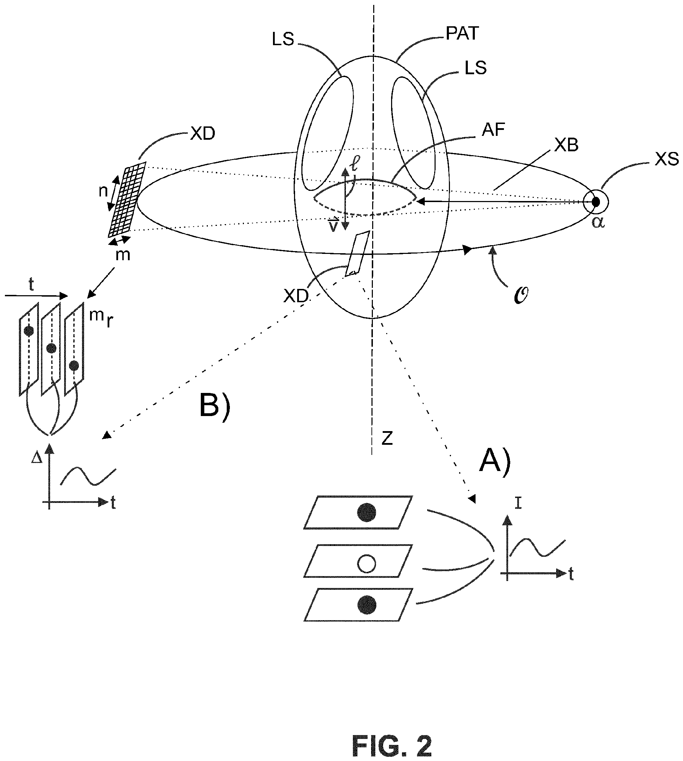

The following Figs 2-4 are illustrations of concepts underlying operation of the motion compensator MC, whilst the block diagram of Fig. 5 and the flow chart of 6 provide more details.

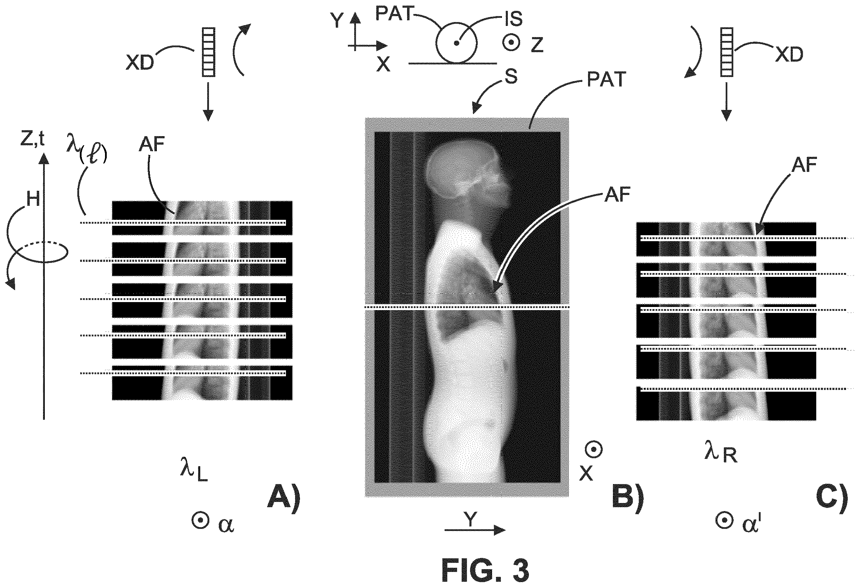

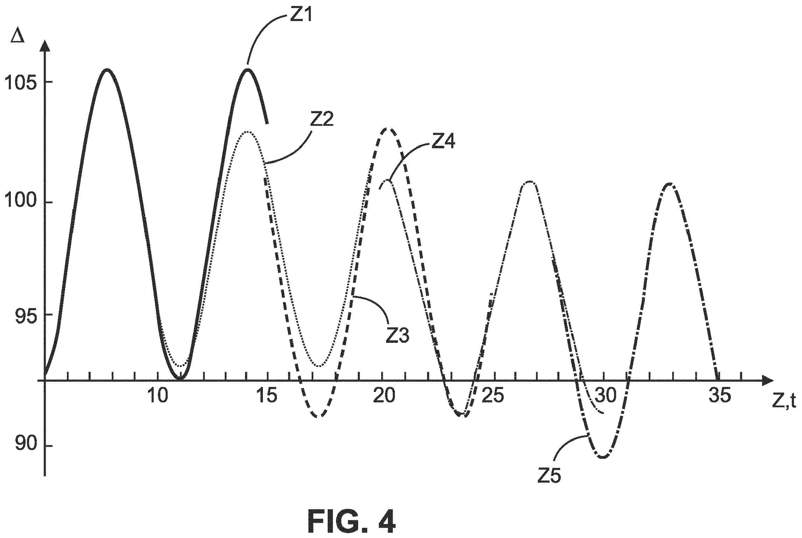

The illustrations in Fig. 2 refer to an axial S&S scan protocol, whilst Figs 3, 4 relate to a helical scanning protocol.

In general, and referring for now to Figs 2-4 collectively, the proposed motion compensator MC is configured to use precisely defined trigger points to effect a reliable binning according to motion phases, or motion states more generally for non-periodic motions.

In more detail, operation of motion compensator MC may be arranged as dual-stage processor: in a first stage, based for example on reference line ℓ, projection data selector SEL selects suitable frames from the projection imagery λ stream. Specifically, each frame whose projection plane incudes a projection λ( ℓ ) (of reference line ℓ is selected, set aside or flagged up. It is the set of such flagged frames that are then analyzed by an analyzer stage including an in-image detector component DC configured to form the over-time profiles in relation of the anatomical feature AF's footprint as encoded in the flagged frames, relative to the projection λ( ℓ ). The profile(s) may then be monitored/analyzed for trigger points to effect the gating.

Referring now first to the S&S protocol in Fig. 2 in more detail, this illustrates the selecting based on reference line ℓ of acquired projection imagery λ. The concept is illustrated for the anatomical feature AF of the diaphragm, which has been found herein to form a good motion surrogate for thorax, or chest imaging generally. For other regions of interest, the choice of another anatomical feature AF as a motion surrogate or tell-tale may be more apt.

Two options A), B) are envisaged herein in embodiments. In general, the reference line ℓ may be a function of motion vector *̅v̅*̅ of the intended anatomical feature AF, such as the diaphragm. Its motion may be characterized by a linear up and down motion along or parallel patent's longitudinal axis which can be easily observed in frontal or coronal projection planes for example. The schematic view afforded by Fig. 2 is perpendicular to frontal plane along the anterior-posterior (A-P) axis. The two lungs LS and the diaphragm AF are shown schematically. The diaphragm AF transitions between two extremal states and through a number of intermediate states as it relaxes and contracts over cycles, with exhalation and inhalation as indicated by the solid and dotted lines and motion by double arrow vector *̅v̅*̅.

The reference line may be defined, for example by user via user interface UI, along A-P axis, perpendicular to the plane/axis of diaphragm motion *̅v̅*̅.

However, preferably, the line is selected automatically. To this end, system SYS may include a path definer PD, configured for such automatic selection of such a reference path, such as one (or more) of the said lines ℓ. Operation of the path definer PD may be based on anatomy guided image processing of a surview image. In addition or instead, based on the or a surview image S, attenuation values of line candidates can be determined. The position of the reference line may be taken where a transition of attenuation values across multiple lines is established. Instead of the surview image, one of more of the projection frames may be used, in particular in case of the helical scan protocol. For S&S, the surview image S may be used by path definer PD. The survive image is in projection domain (2D). In more detail, and with reference to some envisaged embodiments of the path definer PD (which may be also referred to herein a line definer as in preferred embodiments the path is a line as mentioned), the approximate positions of the lung centers are detected in the surview image, followed by a search for line candidates in the patient's caudal direction, according to some, but not all, embodiments. Other anatomical directions are also envisaged, such as AP direction, or others still. For some or each such line candidate, an associated attenuation value is determined. If a line candidate is above the diaphragm, the corresponding attenuation value remains below a certain threshold. When a line candidate passes through, or at least contacts, the diaphragm or liver tissue. its attenuation value will be higher. The position where this transition takes place is recorded. If the respiratory state in which the surview image is acquired is known, an adjusted position can be determined by a shift into, for example, the patient's cranial direction (in case the surview image is acquired in or close to end-inhale state) or into the patient's caudal direction (in case the surview image is acquired in or close to end-exhale state). If the respiratory state is unknown, such a shift is applied into both the patient's cranial and caudal direction and two adjusted positions are determined. The above principles of observing attenuation values and shifting along an anatomical line to find the reference line may be applied in respect of other anatomical features AF, as required.

As said, position and/or direction in 3D image domain of the reference line is generally a function of the geometry of the movement of the anatomical feature AF. If the movement of the anatomical feature is confined to a plane, as will be assumed herein in some embodiments, at least in good approximation, the projection direction α for reference line ℓ may be substantially perpendicular to such a plane. If the target motion of feature AF is not confined to such a plane, it may be sufficient to consider projection of a component of the motion onto such plane as such consideration may be sufficient to establish motion states/phases for present purposes.

The reference line allows selecting the acquired projection imagery as mentioned earlier. Turning now to option A), illustrated to the right of Fig. 2, preferably, some or all frames whose image surface/plane intersects the projection direction α associated with reference line ℓ, may be flagged up for the motion analysis of over-time motion profiles. In embodiments, a change in intensity of the frames at the interaction point are used to trigger a gating event. An intensity profile is monitored for events to trigger gating event and bin the current frame. For example, line ℓ may be positioned superior to the diaphragm AF in inhalation phase. Consequently, towards exhalation phase the diaphragm will cross that line and thus effect a change of intensity as is indicated in the measurement of a periodic intensity profile *I*(*t*)*.* This change of intensity is periodic on account of the diaphragm's oscillatory motion, and it is schematically indicted by the varying shading of the intersection point, transiting from black to light, and back. Thus, the monitoring of the intensity curve *I*(*t*) at the intersection point for such a crossing event of the diaphragm may be used for determining the trigger point to bin the respective frame for which such intensity change is detected. Repeated triggering of the frames as they pass the line results in the binning of the projection data, and thus, effectively, in the gating mechanism as envisaged herein. Alternatively, the reference line may be set inferior the exhalation phase.

This principle may be extended to define plural reference lines to trigger for different phases. In addition or instead, a plurality of such lines for the same phase may be used, and the triggering is based on combining the respective intensity measurements, by averaging or other, to more robustly establish the correct gating trigger point. However, it has been observed that a single such reference line affords computational responsiveness and memory real-estate savings. Thus, just a single line is sufficient for present purposes, and the diaphragm or other anatomical feature position is estimated based on attenuation value transitions (eg, between dark-bright transitions) along the projection λ( ℓ) of the line ℓ as located in the (selected) projection imagery. -Thus, a single reference line ℓ is sufficient herein in order to determine the temporal position that represent the same respiratory or cardiac of another anatomical motion state.

Placing the line correctly (for example superior the inhale phase to ensure crossing events do indeed occur) is a consideration. To this end, a 2D or 3D surview scan of patient may be done in a preparatory phase (prior to diagnostic imaging at higher dose), and user interface UI, such as a GIU, is used, with which user can mark up the projection λ( ℓ) of reference line ℓ in the surview scan S. This can be done based on user's medical/anatomical knowledge. Alternatively, or in conjunction with such user defined placement, a suitably trained machine leaning algorithm may be used to this effect, taking as input the intended anatomical feature AF, and the algorithm automatically places one or more of such lines into the surview scan. The machine learning algorithm may be based on a regressor model, for example of the artificial neural network (ANN) type, in particular in convolutional configuration to better harness spatial correlation as can be expected to be expressed in image data. Instead, or in addition, the previously described image processing based on "candidate reference lines" may be used.

Turning now to option B) as illustrated to the left in Fig. 2, this may rely on tracking the diaphragm AF's projection footprint as a geometric shape across the projection imagery, in particular, frames that cross the A-P direction perpendicular to motion plane in which projection λ(ℓ) refence line ℓ lies, and to monitor displacement profile Δ(t) of the footprint in order to establish trigger points. The diaphragm AF's projection footprint may be found in certain a priori-known portion of the detector XD's image surface, such as in a particular detector column, or group of columns, or other. In such embodiments, as is illustrated at B), anatomical feature AF's projection footprint (indicated in highly schematic manner by a black dot), can be found for example by segmentation, optical flow methods, etc., and can be tracked across multiple frames selected based on reference line ℓ as described above at A). Apparent motion of the footprint across the selected frames can be graphed as the displacement Δ(t) profile over time. As this is periodic, phases can be determined which in turn can be used as trigger points for the gating.

In A), B), only parts of the selected frames are shown. The other parts of frames are at 180°, and are preferably also considered in the motion analysis.

Turning now to Fig. 3, this shows options for a helical scan path H, as indicated over time on the left of Fig. 3 where the source XS rotates about imaging axis Z

The top part of Fig. 3 affords a perspective along the imaging axis extending, perpendicularly into the drawing plane of Fig. 3, with acquisition rotation indicated by curved around an iso-center IS situated within the patient PAT. (X, Y) generally relates to image planes in image domain, with imaging axis Z perpendicular thereto generally aligned with patient's longitudinal axis.

A scout scan S in sagittal view of an anthropomorphic imaging phantom is illustrated in B). The gating procedure in helical scans is similar to the one in axial scans above at 2), but is preferably repeated at multiple positions z along imaging/rotation axis Z. One such z position is indicted by the line in A-P direction (drawn horizontally in pane B). Motion analyses are then done for each of a plurality of such z positions, and the results are then combined to so obtain good robust gating results, as illustrated in Fig. 4. The selection of z positions could be done at random, so long as all selected points are within half a collimation width. Selection of 3 or more points are preferred, such as 4,5 or other. Such multi-z-position-based computing is useful for helical acquisition mode as it is both, the varying respiration state, and the varying cone angle that are contributing to the attenuation measured for a single ray (or for multiple rays) around the anatomical feature, such as the diaphragm dome or chest wall. Thus, for helical acquisitions it is proposed herein a more robust way to extract the respiratory signal. To this end, herein use is made of the fact that in helical mode, the pitch is usually very small, namely in the order of 0.04 to 0.10 for example. Thus, in this example, each voxel remains for 10 to 25 rotations within the radiation cone. *"Pitch"* is an acquisition parameter of the imager and relates the effective translation along rotation axis Z per 360° rotation divided by the collimation width.

In this embodiment, to better account for effects observed in helical scans, the reference line ℓ may be run in embodiments along the lateral-medial (L-M) axis. Two sets of lateral frames λ_{L,R} one 180° rotational degrees apart from the other may be so defined: a left set ("L") of frames at α°, and a right ("R") set of frames at α' = 180°+α, as illustrated in panes A), C). Figs A), C) illustrate various frames over time. In the example in Fig. 3, the anatomical feature of interest AF is the chest wall, but may equally be, as before, the diaphragm or the upper abdominal wall, or other. The same applies to Fig. 2, as there the chest wall or upper abdominal wall may have been chosen instead of the diaphragm. Again, as before in Fig. 2, the projection direction α associated with reference line ℓ is essentially perpendicular to the motion vector *̅v̅*̅, but is now at 90° to the direction α for reference line in Figure 2. The projection λ(ℓ) of reference lines ℓ for each frame is shown as dashed line. Fig. 3A), C) illustrate projection frames from left λ_{L} and right λ_{R}, respectively. The dashed line indicates the respective position where the chest wall position is to be measured.

The projection imagery is preferably imaging-geometry-rebinned from the native divergent cone beam geometry, into a parallel geometry, or other non-divergent geometry, such as wedge geometries. Such wedge-geometries are reported for example by P Koken and M Grass in Phys. Med. Biol. 51 (2006) pp 3433-3448.

Again, as in Fig. 2, option B), segmentation, optical flow, etc. may be used to track chest wall AF footprint across frames to establish displacement profile Δ(t) to set trigger points for gating/binning based on phases of the periodic displacement profile. Maxima and minima points may be used for gating, or others. The above is repeated for multiple z positions as illustrated at Fig. 4 to which now more detailed reference is made. Five displacement profiles Δz(t) for 5 different z positions z1-z5 are shown as an example for illustration. Specifically, Fig. 4 is a schematic illustration of chest wall positions at some selected z-positions as a function of scan time. Since the distance of the z-positions is half a collimation, the measurements overlap by 50%. At each z-position, a periodic breathing signal is obtained. Minima and maxima of overlapping signals match, but their absolute positions differ because a different position of the chest wall is analyzed. Note that each curve is interpolated from typically 10 to 25 individual measurements thanks to the low pitch, which adds additional robustness.

Reference is now made to the block diagram of Fig. 5 which shows components of the motion compensator MC.

Projection imagery λ' acquired by the tomographic imaging apparatus IA and as detected at its detector XD is received at input port IN. The projection imagery is acquired in frames at multiple directions around the feature of interest AF. In cases of acquisition in a divergent imaging geometry, such as helical and/or cone-beam, an imaging geometry rebinner RB is used that re-bins the projection imagery into a parallel, or at least approximately parallel, geometry. It is the so imaging-geometry re-binned projection imagery λ which is preferably processed herein.

A projection data selector SEL, selects frames in projection imagery λ, based on reference line ℓ, that are considered for processing. Reference line may be user selected. For example, a scout image S of a volume including the ROI and/or feature of interest AF may be rendered. User interface UI, such as GUI, may be used by user to interactively select one or more reference lines. Reference line may be for example perpendicular to A-P direction. Thus, reference line ℓ may be defined perpendicular to motion of anatomical feature, but other angles are also envisaged. Preferably, but not necessarily, reference lines are not parallel to motion vector. Motion of the feature of interest AF is to serve as a surrogate for gating to so account for patient motion. The anatomical feature of interest AF may be the same as the region of interest, but may differ therefrom.

An in-image detector component DC performs the motion analysis in the selected frames, as described above. Over-time motion profiles are obtained that represent the, preferably periodic, motion and its phases.

For example, an in-image detector component DC may detect, across the over-time pre-selected frames, projection footprints of an anatomical feature. In-image detector component DC may use segmentation, optical flow methods, machine learning, MBS (prior shape model-based segmentation), etc. for this detection operation. Alternatively, at intersection points of the one or more reference lines with the anatomical feature, , intensity value changes are recorded across time in projection domain of the projected line λ(ℓ) to obtain an over-time intensity profile. A single reference line may be used, thus defining a single location of intersection. Multiple lines may be used, and the above is done per line, with results combined.

Thus, detection component DC performs motion analysis in respect of the reference line and compiles over-time motion profile (times series) based on intensity values I(*t*) or displacement Δ(t) of anatomical feature AF projection footprints as found by segmentation for example. The above may be used preferably for axial scans. In helical scans, the above operation of in-image detector component DC may be repeated for a number of z positions (preferably all located within a collimation width used for the scan, such as half of the collimation width) and the results may then be combined to obtain a more robust, total motion profile which includes a sufficient number of phases to allow for robust gating. Gating component GC uses phase points on such periodic over-time profiles as trigger points for gating. Suitable such surrogate anatomical features AF for motion have been found to be the chest wall, the abdominal wall or the diaphragm, or any other suitable anatomy or part thereof, preferably one engaged in periodic motion, but, again, handling of non-periodic motion is not excluded herein. Contrast agentbased X-ray imaging is also envisaged herein which can be used to account for cardiac motion in which case the segmentation is for certain sections of the cardiac vessels as recordable in the projection imagery there. The rotation time and pitch of imager IA may need to be adjusted in view of the, in general higher, frequency of motion induced by cardiac activity.

Preferably, but not necessarily, the motion is periodic as is the case for motion caused by respiratory or cardiac action. The periodic over-time profile for motion states of the anatomical feature over time includes different phases. The phases of the periodic motion may be used to define the motion states where different phases represent different motion states. As the motion profile is preferably recorded by in-image component DC over a plurality of cycles for better stability, several projection frames can be binned into the same subset λ^{ϕ} by gating component for any given one phase/motion state. Different sub-sets include frames for different phase, whilst frames within a given sub-set represent the same phase. These sub-sets of frames λ^{ϕ} may then be output as gated sub-sets of projection frames through output interface OUT for further processing, such as storage or displaying on display device DD by a visualizer or other processing. Primarily, as mainly envisaged herein, the processing includes reconstructed imagery V (volume or slice) and it is such reconstructed imagery V that is displayed on display device DD. Specifically, the respective gated projection frames λ^{ϕ} may be separately reconstructed for each ϕ, to yield different image volumes V_{ϕ} each representing the anatomical feature and its surroundings in respective different states without motion artefacts. User may then specify ϕ, and the system returns (eg displays) the respective reconstructed imagery V_{ϕ}.

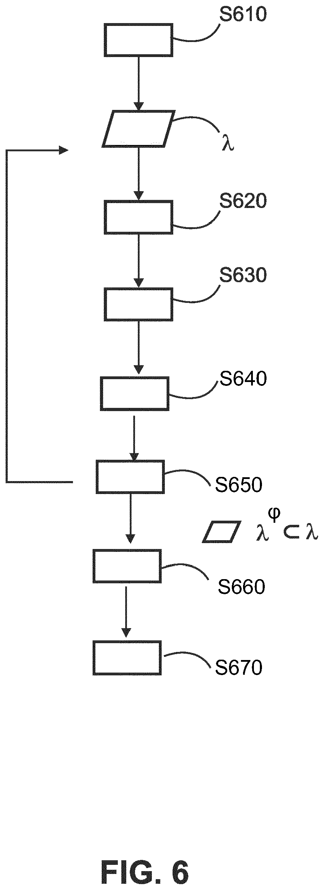

Reference is now made to the flow chart of Fig. 6 which shows steps to carry the above-described motion compensation principles into practice. It should be understood however, that the below described steps of the method of the computer-implemented motion compensation operation is not necessarily confined to the architecture discussed above. More particularly, Fig. 6 shows a chart of a method for processing projection data as acquired in tomographic imaging.

At step S610 an X-ray based tomographic imaging apparatus is used, in a helical or S&S type scan, to acquire projection imagery λ'. If helical and/or cone-beam scan is used, the projection data may be imaging-geometry-re-binned into at least approximately parallel imaging geometries, and this (re)binned projection imagery, which may now be referred to as λ, that is then used throughout the remaining steps.

At step S620 such projection imagery, possibly imaging geometry -re-binned for a different, at least approximately parallel imaging geometry, is received at step S620.

At optional step S630, based on one or more reference paths (preferably a single such path), frames are pre-selected. As described above, lines as such path are mainly envisage herein, so well will continue to refer to the reference path as a reference line, without limiting the present disclosure. The reference line is preferably perpendicular to a motion vector which describes motion of anatomical feature of interest. The reference line(s) may be specified by a user based on a surview scan, or may be computed based on the imaging protocol using machine learning for example, or a look-up-table where suitable reference lines are recorded vs imaging protocol (purpose of imaging, ROI, etc.). Machine learning may be used to define suitable reference lines. In other embodiments, look-up tables may be used as may be compiled from an anatomical atlas or other model. In addition or instead, the above described attenuation-value based processing/analysis of the projection imagery is used as described above with reference to the path definer PD.

At step S640 in-image processing is used, solely based on image information in the projection imagery and across frames thereof, to perform motion analysis over time in respect of the one of more reference lines of anatomical feature AF of interest as represented, by its projection λ(ℓ) in the projection imagery. A profile over time of an aspect of the motion may be recorded. The profile is preferably periodic, as is the motion, and represents motion phases/states, preferably over a plurality of motion cycles. In addition or instead, the in-image analysis yield different positions of the projection of the anatomical feature, and each such position represents a state of motion.

The in-image processing step S640 may include a segmentation operation, and/or may use optical flow methods, to identify across frames and/or ins some or each of the selected frames, projection footprints of anatomical feature to thereby derive representation of the movement which allows identifying different phases of the movement. Additionally, or in variation to this, the over-time profile is one of attenuation intensity variation caused by the motion. The intensity variations may be taken at intersections of the projection direction α for reference line(s) ℓ with frames. However, the motion may not need to be periodic, and non-periodic motion is also envisaged.

The phases as represented in the profiles and/or the positions determined at step SS640can be used to define trigger points for gating/binning at step S650. Frames that represent the same or sufficiently similar phase or motion state will be binned into the same bin representing the same motion state. More generally, the different positions of the projections of the anatomical feature are used to define the bins. Each position that falls into a predefined one from one or more intervals is deemed to represent the same, or at least sufficiently similar, frames.

The so re-binned frames of the original projection imagery may then be forwarded on at step S660 for further processing at step S670, such as for storage, or for displaying, or any other processing as required. In the intensity-based embodiment, intensity value thresholding may be used to define trigger points for the gating in step S660.

Preferably, the different bins of projection imagery are made available at step S670 for reconstruction at step S670 to reconstruct therefrom that is, per bin) a respective tomographic volumes Vϕ, each solely based on frames from the respective bin representative of a particular motion state ϕ.

The proposed method can be used for helical and/or cone beam acquisitions. In helical scans, the above method steps S630-S640 are done for different z positions along the imager's rotation axis as covered in the helical scan. The various over-time profiles so obtained, one per z positions, are then combined to obtain one total profile which includes a sufficient number of phases from multiple cycles.

In more detail, and referring back to option A) of Fig 2 for axial S&S scanning, step S630 may include receiving the reference line based on prior knowledge (e.g., scout scan) in embodiments, the reference line runs in AP-direction just above the diaphragm in inhalation state, or just below exhalation state. Other anatomical features AF that are subject to motion may be used instead, with the line of interest suitable defined, for example perpendicularly to the motion vector.

At step S640 the attenuation for the selected line of interest (a single ray) is monitored over acquisition time and stored as a profile, and the profile is analyzed to define triggering points which can be used in step S650 for gating/binning to obtain the respective sets for each trigger point.

Only a single ray can be considered and tracked which allows for responsive implementation. The depth of exhalation is correlated to the value of the line integral, i.e. during expiration phase, the diaphragm dome moves upwards and the line integral increases. Optionally, several rays can be tracked in order to increase the dynamic range of the process. For example, if a patient inhales more deeply during acquisition than expected, then this state would not be recognized since the attenuation will not decrease any further once the diaphragm is below the reference line. Using more such reference lines, suitably placed, increases the likelihood that the state is indeed detected.

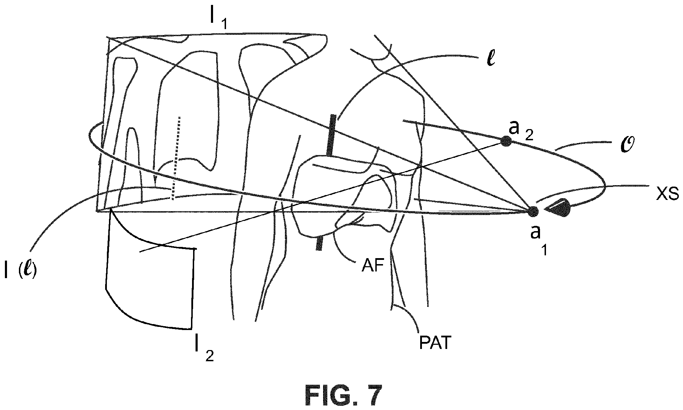

Turning now to option B) in Fig. 2, step S640 may include identifying, based on prior knowledge (e.g., scout scan S) or by ML methods, a part of the detector surface, such as detector column, that covers the diaphragm in the direction α of reference line, e.g., the caudal-cranial CC direction of patient PAT. Thus, in this embodiment, the reference line ℓ is parallel to the rotation axis Z, and it is the projection λ(ℓ) of the said reference line ℓ that is observed/tracked, preferably in projections acquired, in embodiments, along AP (anterior-posterior) -direction α of patient PAT (see also Fig. 7 below for an illustration) or along lateral projection directions. The position of the diaphragm as displacements are estimated by segmentation in the AP projections and a direct measure of the diaphragm position can be thus computed. The displacement vector of positions (over respiratory time) is analyzed to define gating/binning triggering points, for respiratory state.

Turning now to helical and/or cone beam CT scan, this may include rebinning for a wedge geometry or other non-divergent imaging geometry.

At step S630, horizontal (i.e., lateral) wedge projections along M-L axis are selected.

At a prior step in step S640, a set of z-positions is selected along the rotation axis Z, for which a respective motion analysis is to be done, such as where the anatomical feature, preferable chest wall position, is to be detected. The z-positions should be not farther apart from each other than half of a collimation width. For some or each such selected z-position, the projection footprint of the anatomical feature is detected in the detector image surface for each lateral projection frame. This may include calculating for each lateral projection frame onto which part of the radiation-sensitive detector surface the anatomical feature, such as chest wall at the respective z-position, is projected onto. Based on the segmentation, estimation of the displacement Δ (position of the anatomical feature) is determined. For example, the position of the chest wall on the dotted lines in the projections shown in Fig. 3 A), C) is determined. Based on imaging geometry and knowledge of the reference line allows pre-estimating the relevant detector surface part which allows saving compute time. Rather than searching for the projected reference line λ(ℓ) in the entire detector surface, the search is restricted to the pre-estimated part. For example, in preferred embodiments, the reference line will be projected to different rows as the system moves along the helical path. At step S640 phases are estimated for the over-time profile of such displacement Δ such as minima and maxima of the estimated chest wall positions. This is done for each z-position, and the phased are then combined, for example by identification of matching pairs of minima and maxima across neighboring z-positions as was illustrated in Fig. 4 above. The phases across the z-position may than be used to trigger gating S650.

Preferably, for good results, the anatomical feature AF is so chosen so as to remain in FOV at all time, and wholly so. However, this may not be achievable necessarily. In addition or instead, the proposed method is reliant solely on image information that is within the FOV at any given time, Features outside the FOV have in general no bearing on the proposed processing and do not influence its results. The proposed method is thus robust against outside-FOV events and information. This is even the case of for a single reference line ℓ, where a relevant portion (such as a point) of the anatomical feature AF remains preferably wholly and at all times during scan in the FOV. Thus, all relevant information for a complete and robust binning can be obtained by tracking the manner in which the projection image value (attenuation) along that single line changes/fluctuates over time due to the motion of the anatomical feature AF, such as of the said point of the diaphragm. In the diaphragm example, the single reference line ℓ is observed under projection α in anterior-posterior AP direction and may be used to observe therethrough the passage of the diaphragm AF as explained above.

Fig. 7 is an illustration of the above-described device-less and reconstruction-less gating system and method as disclosed herein. Source XR rotates along scan orbit 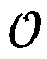 around anatomical feature AF, whilst anatomical features AF (such as diaphragm as illustrated) moves along reference line ℓ. Frames λ1,2 along different projection directions α1,2 are recorded. At least one such projection direction α1 is associated with the reference line ℓ . Specifically, the (reference) projection direction α1 is preferable perpendicular to the plane of reference line ℓ. For the diaphragm AF, the projection direction α1 for reference line ℓ is along the AP direction of patient PAT. In such embodiments, the reference line ℓ is along the cranial-caudal direction, passing through diaphragm AF. The motion state bin is determined based on the "reference" frames λ1 by tracking the projection λ(ℓ) in the "lead" frame λ1, as described in in the above described embodiments.

Thus, the binning/gating/assigning step S650 and previous analyzer step S640 as envisaged herein and as used in Fig. 6 may be conceptualized as aspects of a two-stage data processing pipeline, including the following: the analyzing/in-image detecting step S640, and, based on the analyzing step S640, the assigning/binning/gating step S650. The assigning/binning/gating S660 step may include an interpolation step. In more detail, in the analyzing step S640, the position/motion state of the anatomical feature is determined, only based on information in the reference frames in relation the reference line ℓ (eg, AP direction), such as along or across such line. In the assigning step S650, the motion state may then be interpolated for some projection directions α2, between the position as per the reference line ℓ, depending on the number of desired bins. This allows obtaining motion state estimates also for the other frames λ2 collected along other projection directions α2 (see Fig. 7). In the sub-sequent assigning step, some or each frame, no matter along which projection direction collected, may then be assigned to the respective bin into which its respective motion state (measured or estimated) falls. The bins may be defined as intervals in the angular range or as intervals in positional range e.g. length, or alike. For other projection directions a1, no such interpolation may be needed.

In yet more detail, the respective bin for frames λ2 along said other projection directions α2 may be obtained by spatio-temporal interpolation based on plural reference frames λ1a,... λ1z recorded along α1 for reference line ℓ over time in multiple rotations. Such frames λ1a,... λ1z represent the anatomical feature AF at the same motion state, etc. In the spatio-temporal interpolation, the timing of acquisition of frames and their distance from neighboring bins are accounted for. For example, and more specifically, if a frame is recorded at an instant between acquisition times of two frames that belong to the same bin, then that frame is also assigned to the said same bin as the motion is assumed continuous. Otherwise, if the frame is recorded at an instant between acquisition times of two frames that belong to different bins, a spatio-temporal weighting is done (with optional rounding up or down) to find the correct bin.

As used herein, the term motion may include translation, rotation, but also deformation, or a combination of any two or all of the foregoing.

It will be further appreciated that whilst the above approach was illustrated based on a refence line ℓ, other reference paths, not necessarily lineal, may also be envisaged herein, such as curved paths. However, lineal refence paths, such as the described reference line ℓ, affords advantages in computational implementation, and any may be preferred herein. In addition, it may suffice to consider components of more complex motions of certain anatomical features onto such a refence line ℓ. The components of system SYS may be implemented as one or more software modules, run on one or more general-purpose processing units PU such as a workstation associated with the imager IA, or on a server computer associated with a group of imagers.

Alternatively, some or all components of the system SYS may be arranged in hardware such as a suitably programmed microcontroller or microprocessor, such an FPGA (field-programmablegate-array) or as a hardwired IC chip, an application specific integrated circuitry (ASIC), integrated into the imaging system MIA. In a further embodiment still, the system SYS may be implemented in both, partly in software and partly in hardware.

The different components of the system SYS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solidstate medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

## Claims

1. System (SYS) for processing projection data for tomographic imaging, comprising:
an input interface (IN) for receiving projection imagery acquired by a tomographic imaging apparatus (IA) along different projection directions of an anatomical feature (AF) of an object undergoing motion, with transitions through plural motion states;
an in-image detection component (DC) configured to detect, in respect of at least one reference path, a motion state of the anatomical feature (AF) based on image information in the projection imagery;
a gating component (GC) configured to assign a subset of the projection imagery to a motion state bin-based on the detected motion state, and
output interface (OUT) for providing the so assigned subset of projection imagery for reconstruction.

2. System of claim 1, wherein the said path is selected based on an analysis of a surview image of the anatomical feature or on an analysis of the projection imagery.

3. System of any one of the previous claims, wherein a plane of the at least one such reference path is substantially perpendicular to a projection direction at which at least some of the projection imagery is acquired.

4. System of any one of the previous claims, wherein the said anatomical feature resides during such motion, wholly, and at all times, within the tomographic imaging apparatus's field of view.

5. System of any one of the previous claims, the system including a tomographic reconstructor (RECON) to reconstruct for at least one motion state, and based on projection imagery assigned to that bin and/or to one or more bins of similar states, a reconstructed sectional image volume V representative of the object in the said motion state.

6. System of any one of the previous claims, wherein system includes a display device (DD) for displaying the reconstructed image and/or the motion-state.

7. System of any one of the previous claims, wherein the tomographic imaging apparatus (IA) is configured for axial or helical imaging.

8. System of any one of the previous claims, wherein the said anatomical feature includes at least a portion of one or more of an imageable patient's diaphragm, chest wall, and abdominal wall.

9. System of any one of the previous claims, wherein the anatomic feature is an anatomy of a patient, and wherein such motion is caused by any of: respiratory activity and cardiac activity.

10. System of any one of the previous claims, including a path definer (PD) configured to compute such reference path based on a surview image or based on said or other projection imagery.

11. System of any one of the previous claims, wherein the said reference path is a line.

12. An imaging arrangement (MIA) comprising the system of any one of the previous claims, and the imaging apparatus (IA).

13. Method of processing projection data for tomographic imaging, comprising:
receiving (S620) projection imagery acquired by a tomographic imaging apparatus (IA) along different projection directions of an anatomical feature (AF) of an object undergoing motion, with transitions through plural motion states;
in-image detecting (S640), in respect of at least one reference path, a motion state of the anatomical feature (AF) based on image information in the projection imagery;
assigning (S650) a subset of the projection imagery to a motion state bin-based on the detected motion state, and
providing (S660) the so assigned subset of projection imagery for reconstruction.

14. A computer program element, which, when being executed by at least one processing unit, is adapted to cause the processing unit to perform the method as per claim 13.

15. At least one computer readable medium having stored thereon the program element of claim 14.
